# EUROPÄISCHE PATENTSCHRIFT

(11) **EP 3 060 423 B1**
(45) Veröffentlichungstag und Bekanntmachung des Hinweises auf die Patenterteilung: **19.07.2017**
(21) Anmeldenummer: 14781909.8
(22) Anmeldetag: 10.10.2014
(51) Int. Cl.: B60N 2/06, B60N 2/22, B60N 2/235, B60N 2/015, B60N 2/20, B60N 2/36, B60N 2/433, B60N 2/28

(54) **FAHRZEUGSITZ**
VEHICLE SEAT
SIÈGE DE VÉHICULE

(30) Priorität: 23.10.2013 DE 102013221576; 07.02.2014 DE 102014202239
(43) Veröffentlichungstag der Anmeldung: 31.08.2016
(73) Patentinhaber: Adient Luxembourg Holding S.à r.l., 2453 Luxembourg (LU)
(72) Erfinder: DILL, Thomas, 67699 Heiligenmoschel (DE); RAPEDIUS, Joerg, 67728 Muenchweiler (DE); ENNS, Viktor, 67663 Kaiserslautern (DE)
(86) Internationale Anmeldenummer: PCT/EP2014/071742
(87) Internationale Veröffentlichungsnummer: WO 2015/058975

(56) Entgegenhaltungen:
- EP-A1- 1 810 873
- DE-A1- 10 028 403
- DE-B3-102006 009 613
- JP-A- 2012 071 701

## Beschreibung

Die Erfindung betrifft einen Fahrzeugsitz mit den Merkmalen des Oberbegriffs des Anspruchs 1.

### Stand der Technik

Aus der DE 10 2006 009 613 B3 ist ein gattungsgemäßer Fahrzeugsitz bekannt. Der als Rücksitz ausgeführte Fahrzeugsitz weist eine Rückenlehne mit mindestens einem ersten Lehnenteil und einem zweiten Lehnenteil auf, wobei das erste Lehnenteil eine in Querrichtung vorstehende untere Verlängerung aufweist und das zweite Lehnenteil an der unterer Verlängerung angelenkt ist. Der zweite Lehnenteil ist neben dem ersten Lehnenteil angeordnet und seitlich in einer ersten Verriegelungseinrichtung mit dem ersten Lehnenteil verriegelbar und nach Entriegelung über eine Entriegelungseinrichtung vorklappbar. Die erste Verriegelungseinrichtung weist hierbei ein am zweiten Lehnenteil vorgesehenes Drehfallenschloss, und einen am ersten Lehnenteil vorgesehenen Verriegelungsbolzen zur Aufnahme in dem Drehfallenschloss auf.

Aus der WO 2012/152361 A1 ist beispielsweise eine dafür geeignete Verriegelungsvorrichtung bekannt.

Die Verriegelungsvorrichtung, bzw. das Drehfallenschloss ist in diesem Fall seitlich an der einen Rückenlehne angebracht und steht in Querrichtung von der Struktur dieser Rückenlehne ab. Das Verriegelungsgegenstück, insbesondere ein Verriegelungsbügel oder ein Verriegelungsbolzen, ist dann seitlich an der anderen Rückenlehne angebracht und steht in Querrichtung von der Struktur dieser Rückenlehne ab.

Weitere Fahrzeugsitze sind aus der JP 2012-071701 A, der DE 100 28 403 A1 und der EP 1 810 873 A1 bekannt.

### Aufgabe

Der Erfindung liegt die Aufgabe zu Grunde, einen Fahrzeugsitz der eingangs genannten Art zu verbessern, insbesondere den Überstand der Verriegelungsvorrichtung sowie des Verriegelungsbügels in Querrichtung über die Struktur der Rückenlehne zu verringern.

### Lösung

Diese Aufgabe wird erfindungsgemäß durch einen Fahrzeugsitz mit den Merkmalen des Anspruches 1 gelöst. Vorteilhafte Ausgestaltungen der Erfindung sind Gegenstand der Unteransprüche.

Ein gattungsgemäßer Fahrzeugsitz weist ein Sitzsegment auf, welches einen ersten Sitzplatz mit einer um eine in Querrichtung verlaufenden Schwenkachse schwenkbaren ersten Rückenlehne und einen zweiten Sitzplatz mit einer um die gleiche Schwenkachse schwenkbaren zweiten Rückenlehne umfasst.

Erfindungsgemäß ist an der zweiten Rückenlehne eine Verriegelungsvorrichtung angeordnet, welche mit einem an der ersten Rückenlehne vorgesehenen Verriegelungsbügel zusammenwirkt, wobei die Verriegelungsvorrichtung mindestens einen Achsbolzen umfasst, dessen Längsachse geneigt zu der Querrichtung verläuft.

Die Verriegelungsvorrichtung ist also erfindungsgemäß, gegenüber einer aus dem Stand der Technik bekannten Anordnung, um eine zumindest annähernd in Vertikalrichtung verlaufende Achse gedreht.

Dadurch ist der Überstand der Verriegelungsvorrichtung über die Struktur der Rückenlehne in Querrichtung verkleinert. Insbesondere ragt ein abstehender Kopf des Achsbolzens weniger weit in Querrichtung auf die erste Rückenlehne zu als bei einer Anordnung, bei welcher die Achsbolzen einer Verriegelungsvorrichtung in Querrichtung verlaufen.

Vorteilhaft schließt die Längsachse des Achsbolzens mit der Querrichtung einen Neigungswinkel von 5° bis 15°, vorzugsweise etwa 10° ein. Bei diesem Winkelbereich ist die Ausdehnung der Verriegelungsvorrichtung in Querrichtung von der Struktur der Rückenlehne weg minimal.

Die Verriegelungsvorrichtung umfasst vorzugsweise eine Drehfalle, welche um den Achsbolzen schwenkbar gelagert ist. Die Längsachse des Achsbolzens bildet dabei die Schwenkachse der Drehfalle.

Der Verriegelungsbügel umfasst vorzugsweise einen Verriegelungsbereich, welchen die Drehfalle bei mit dem Verriegelungsbügel verriegelter Verriegelungsvorrichtung umgreift.

Dabei ist der Verriegelungsbereich vorzugsweise annähernd geradlinig ausgebildet und erstreckt sich entlang einer Bügelachse.

Gemäß einer vorteilhaften Ausgestaltung der Erfindung verläuft die Bügelachse geneigt zu der Querrichtung.

Vorzugsweise schließt die Bügelachse dabei mit der Querrichtung einen Neigungswinkel von 5° bis 15°, vorzugsweise etwa 10° ein.

Besonders vorteilhaft verläuft die Bügelachse bei mit dem Verriegelungsbügel verriegelter Verriegelungsvorrichtung parallel zu der Längsachse des Achsbolzens. Vorzugsweise umfasst die Verriegelungsvorrichtung einen weiteren Achsbolzen, um welchen ein Spannexzenter und/oder ein Fangexzenter, welcher zur Sicherung der Drehfalle bei verriegelter Verriegelungsvorrichtung dient, schwenkbar gelagert ist.

Vorteilhaft weist der weitere Achsbolzen dabei eine weitere Längsachse auf, welche parallel zu der Längsachse des Achsbolzens verläuft, um welchen die Drehfalle schwenkbar gelagert ist.

### Figuren und Ausführungsformen der Erfindung

Im Folgenden ist die Erfindung anhand von einem in den Figuren dargestellten vorteilhaften Ausführungsbeispiel näher erläutert. Die Erfindung ist jedoch nicht auf dieses Ausführungsbeispiel beschränkt. Es zeigen:

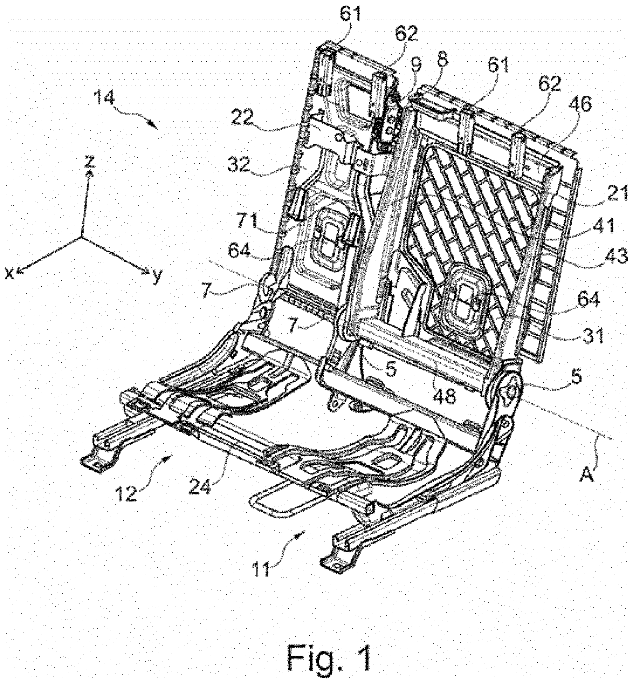

- Fig. 1:: eine perspektivische Darstellung eines zwei Sitzplätze umfassenden Sitzsegments eines Fahrzeugsitzes ohne Polsterung in Gebrauchsstellung,

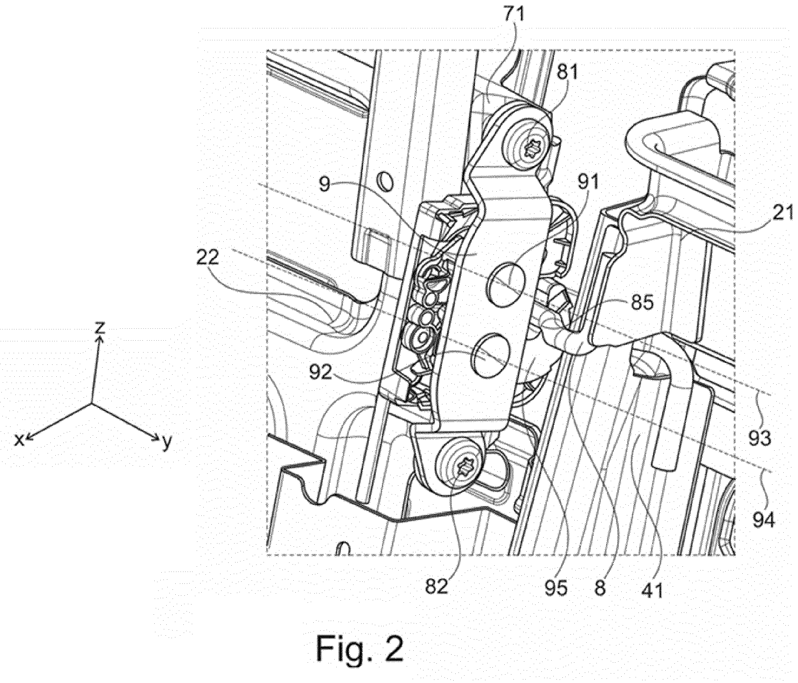

- Fig. 2:: eine Detaildarstellung aus Fig. 1 im Bereich der Verriegelungsvorrichtung,

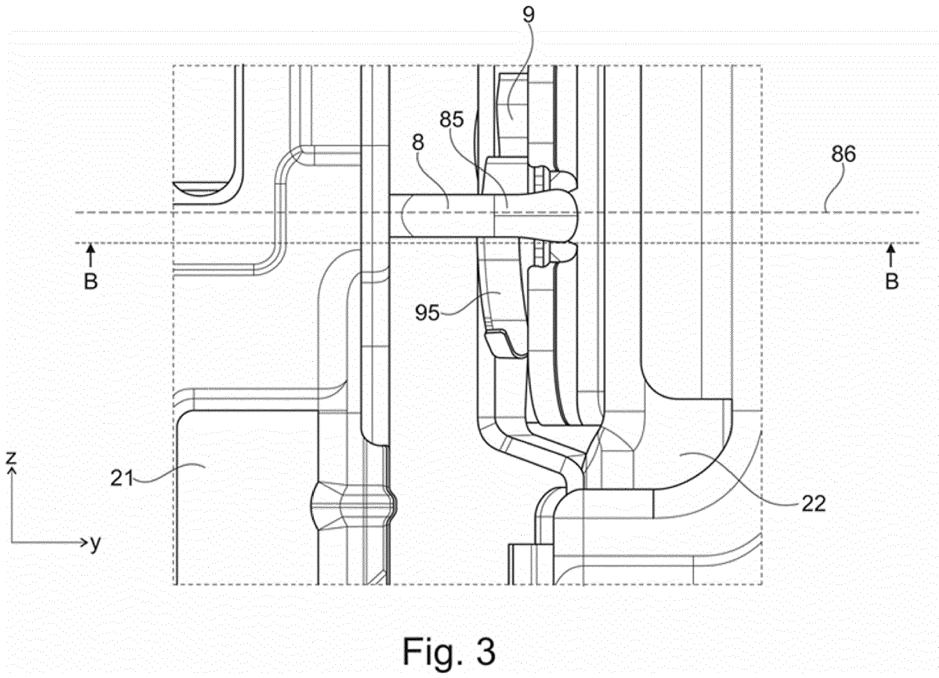

- Fig. 3:: eine Rückansicht auf den Bereich aus Fig. 2 mit nicht verriegelter Verriegelungsvorrichtung in Fahrtrichtung in Gebrauchsstellung und

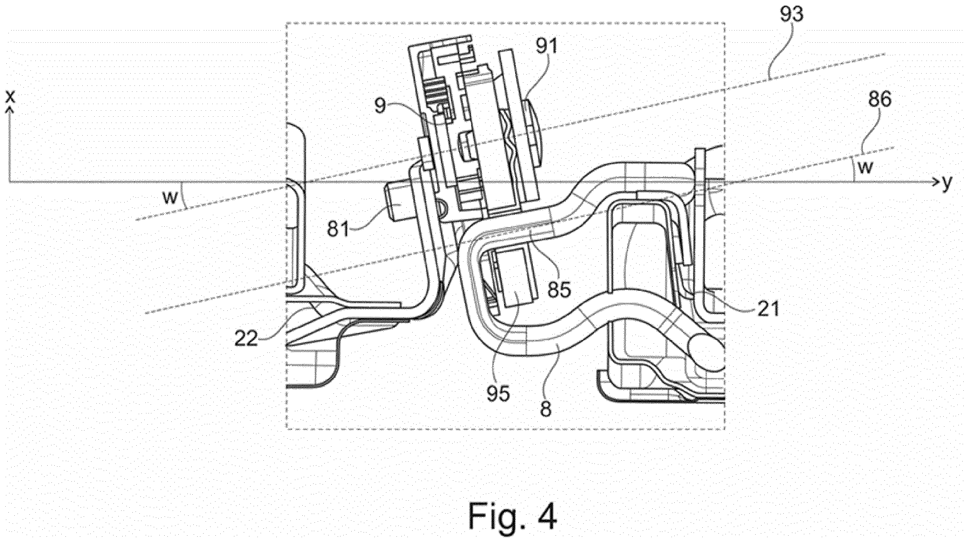

- Fig. 4:: eine Schnittdarstellung entlang der Linie B - B in Fig. 3 in Vertikalrichtung.

Ein Fahrzeugsitz ist als Rücksitzanlage eines Kraftfahrzeuges ausgebildet. Der Fahrzeugsitz 1 umfasst ein Sitzsegment 14 mit einem Sitzteil 24 und ein nicht dargestelltes weiteres Sitzsegment, welche unabhängig voneinander mittels Längseinsteller längseinstellbar mit der Fahrzeugstruktur des Kraftfahrzeuges verbunden sind.

Die Anordnung des Fahrzeugsitzes innerhalb des Fahrzeugs und dessen gewöhnliche Fahrtrichtung x definieren die im Folgenden verwendeten Richtungsangaben. Dabei wird eine senkrecht zum Erdboden orientierte Richtung im Folgenden als Vertikalrichtung z bezeichnet und eine Richtung senkrecht zur Vertikalrichtung z und senkrecht zur Fahrtrichtung x wird im Folgenden als Querrichtung y bezeichnet. Die Vertikalrichtung z schließt vorliegend auch Winkel bis zu 30° zu der Senkrechten ein und umfasst insbesondere die Orientierung einer im Fahrzeug montierten Rückenlehne des Fahrzeugsitzes in einer annähernd aufrechten Gebrauchsstellung.

Das Sitzsegment 14 nimmt ungefähr 60 % der gesamten Breite des Fahrzeugsitzes ein, während das weitere, nicht dargestellte Sitzsegment ungefähr 40 % der besagten Breite einnimmt. Eine erste Rückenlehne 21 sowie eine zweite Rückenlehne 22 sind an dem Sitzteil 24 um eine Schwenkachse A schwenkbar angebracht. Die Schwenkachse A verläuft horizontal in Querrichtung y.

Die erste Rückenlehne 21 bildet mit einem Teil des Sitzteils 24 einen ersten Sitzplatz 11. Die zweite Rückenlehne 22 bildet mit einem Teil des Sitzteils 24 einen zweiten Sitzplatz 12. Die zweite Rückenlehne 22 ist in Querrichtung y zwischen der ersten Rückenlehne 21 und dem weiteren, nicht dargestellten Sitzsegment angeordnet.

Die erste Rückenlehne 21 umfasst ein erstes Lehnenblech 31, welches mittels eines rechten Längsholms 41, eines linken Längsholms 43, eines oberen Querholms 46 und eines unteren Querholms 48 verstärkt ist. Die Längsholme 41, 43 sind annähernd quaderförmig und geradlinig ausgebildet. Bei in annähernd aufrechter Gebrauchsstellung befindlicher erster Rückenlehne 21 verlaufen die Längsholme 41, 43 in Vertikalrichtung z von der Schwenkachse A bis zu dem der Schwenkachse A abgewandten oberen Ende der ersten Rückenlehne 21.

Die zweite Rückenlehne 22 umfasst ein zweites Lehnenblech 32 und einen Seitenholm 71. Bei in annähernd aufrechter Gebrauchsstellung befindlicher zweiter Rückenlehne 22 verläuft der Seitenholm 71 von der Schwenkachse A bis zu dem der Schwenkachse A abgewandten oberen Ende der zweiten Rückenlehne 22.

Der Seitenholm 71 umfasst einen der Schwenkachse A zugewandten unteren Bereich, welcher annähernd quaderförmig und geradlinig ausgebildet ist und bei in annähernd aufrechter Gebrauchsstellung befindlicher zweiter Rückenlehne 22 in Vertikalrichtung z verläuft. Der Seitenholm 71 umfasst einen der Schwenkachse A abgewandten oberen Bereich, welcher annähernd quaderförmig und geradlinig ausgebildet ist und bei in annähernd aufrechter Gebrauchsstellung befindlicher zweiter Rückenlehne 22 in Vertikalrichtung z verläuft. Zwischen dem unteren Bereich und dem oberen Bereich des Seitenholms 71 ist ein mittlerer Bereich vorgesehen, welcher bei in annähernd aufrechter Gebrauchsstellung befindlicher zweiter Rückenlehne 22 geneigt zu der Vertikalrichtung z und geneigt zu der Querrichtung y verläuft.

Der obere Bereich des Seitenholms 71 ist somit von dem rechten Längsholm 41 der ersten Rückenlehne 21 weiter beabstandet als der untere Bereich des Seitenholms 71.

Jede der Rückenlehnen 21, 22, umfasst weiterhin je eine erste Kopfstützenaufnahme 61, eine zweite Kopfstützenaufnahme 62 und einen Top-Tether-Bügel 64, welche jeweils identisch ausgeführt sind.

Das Sitzteil 24 und die Rückenlehnen 21, 22 sind in an sich bekannter Weise mit nicht dargestellten Polstern versehen. Die erste Rückenlehne 21 nimmt ungefähr 40 % der gesamten Breite des Fahrzeugsitzes ein, während die zweite Rückenlehne 22 ungefähr 20 % der besagten Breite einnimmt.

Die erste Rückenlehne 21 ist mittels zweier Beschläge 5 mit dem Sitzteil 24 verbunden. Die Beschläge 5 sind vorliegend bauartgleich. Jeder Beschlag 5 weist ein mit dem ersten Sitzteil 24 fest verbundenes, das heißt sitzteilfestes, erstes Beschlagteil und ein mit der ersten Rückenlehne 21 fest verbundenes, das heißt lehnenfestes, zweites Beschlagteil auf, welche relativ zueinander verschwenkbar sind. Die beiden Beschlagteile können in baulicher Hinsicht eine scheibenförmige Einheit bilden und beispielsweise durch einen Umklammerungsring zusammengehalten werden.

Vorliegend sind die Beschläge 5 jeweils als Rastbeschlag ausgebildet, das heißt die beiden Beschlagteile sind mittels beweglicher Riegel miteinander verriegelbar. Die Riegel werden beispielsweise durch einen federbelasteten Exzenter in eine verriegelnde Stellung bewegt. Die erste Rückenlehne 21 ist mittels der Beschläge 5 einerseits in ihrer Neigung relativ zu dem ersten Sitzteil 24 in verschiedene Gebrauchsstellungen einstellbar und andererseits nach vorne in eine Nichtgebrauchsstellung schwenkbar.

Die zweite Rückenlehne 22 ist vorliegend mittels zweier Drehlager 7 mit dem Sitzteil 24 verbunden.

Nahe dem der Schwenkachse A abgewandten oberen Ende der zweiten Rückenlehne 22 ist eine Verriegelungsvorrichtung 9 angeordnet, welche mit einem an der ersten Rückenlehne 21 vorgesehenen Verriegelungsbügel 8 zusammen wirkt. Die Verriegelungsvorrichtung 9 ist an der der ersten Rückenlehne 21 zugewandten Seite des oberen Bereichs des Seitenholms 71 befestigt. Der Verriegelungsbügel 8 ist an der der zweiten Rückenlehne 22 zugewandten Seite des rechten Längsholms 41 befestigt.

Bei mit dem Verriegelungsbügel 8 verriegelter Verriegelungsvorrichtung 9 ist die zweite Rückenlehne 22 zusammen mit der ersten Rückenlehne 21 relativ zu dem Sitzteil 24 um die Schwenkachse A schwenkbar. Bei entriegelter Verriegelungsvorrichtung 9 ist die zweite Rückenlehne 22 unabhängig von der ersten Rückenlehne 21 relativ zu dem Sitzteil 24 von einer annähernd aufrechten Gebrauchsstellung nach vorne und unten in eine Nichtgebrauchsstellung schwenkbar.

Die Verriegelungsvorrichtung 9 ist mittels eines ersten Befestigungselements 81 und eines zweiten Befestigungselements 82 an dem Seitenholm 71 befestigt. Die

Befestigungselemente 81, 82 sind vorliegend annähernd kreiszylindrisch und annähernd rotationssymmetrisch zu einer Mittelachse ausgebildet. Vorliegend sind die Befestigungselemente 81, 82 als Schrauben ausgeführt. Auch andere Ausführungen der Befestigungselemente 81, 82, beispielsweise als Nietbolzen, sind denkbar.

Die Mittelachsen der Befestigungselemente 81, 82 verlaufen geneigt zu der Querrichtung y. Bei in annähernd aufrechter Gebrauchsstellung befindlicher zweiter Rückenlehne 22 verlaufen die Mittelachsen der Befestigungselemente 81, 82 annähernd senkrecht zu der Vertikalrichtung z und geneigt, aber nicht senkrecht zu der Fahrtrichtung x. Bei in Nichtgebrauchsstellung befindlicher zweiter Rückenlehne 22 verlaufen die Mittelachsen der Befestigungselemente 81, 82 annähernd senkrecht zu der Fahrtrichtung x und geneigt, aber nicht senkrecht zu der Vertikalrichtung z.

Die Verriegelungsvorrichtung 9 umfasst einen ersten Achsbolzen 91, um welchen ein Spannexzenter und ein Fangexzenter schwenkbar gelagert sind. Die Verriegelungsvorrichtung 9 umfasst einen zweiten Achsbolzen 92, um welchen eine Drehfalle 95 schwenkbar gelagert ist. Der Aufbau und die Funktion der Verriegelungsvorrichtung 9 ist in der o.g. WO 2012/152361 A1 beschrieben.

Die Achsbolzen 91, 92 sind vorliegend annähernd kreiszylindrisch und annähernd rotationssymmetrisch zu je einer Längsachse 93, 94 ausgebildet. Die erste Längsachse 93 des ersten Achsbolzens 91 bildet die Drehachse des Spannexzenters und des Fangexzenters. Die zweite Längsachse 94 des zweiten Achsbolzens 92 bildet die Drehachse der Drehfalle 95.

Die Längsachsen 93, 94 der Achsbolzen 91, 92 verlaufen geneigt zu der Querrichtung y. Bei in annähernd aufrechter Gebrauchsstellung befindlicher zweiter Rückenlehne 22 verlaufen die Längsachsen 93, 94 der Achsbolzen 91, 92 annähernd senkrecht zu der Vertikalrichtung z und geneigt, aber nicht senkrecht zu der Fahrtrichtung x. Bei in Nichtgebrauchsstellung befindlicher zweiter Rückenlehne 22 verlaufen die Längsachsen 93, 94 der Achsbolzen 91, 92 annähernd senkrecht zu der Fahrtrichtung x und geneigt, aber nicht senkrecht zu der Vertikalrichtung z.

Der Verriegelungsbügel 8 ist als mehrfach gebogener Metalldraht ausgeführt und vorliegend mit dem ersten Lehnenblech 31 sowie mit dem rechten Längsholm 41 der ersten Rückenlehne 21 verschweißt. Bei mit dem Verriegelungsbügel 8 verriegelter Verriegelungsvorrichtung 9 umgreift die Drehfalle 95 einen Verriegelungsbereich 85 des Verriegelungsbügels 8.

Der Verriegelungsbereich 85 ist ein annähernd geradlinig ausgebildeter Teil des Verriegelungsbügels 8 und erstreckt sich entlang einer Bügelachse 86.

Die Bügelachse 86 verläuft geneigt zu der Querrichtung y. Bei in annähernd aufrechter Gebrauchsstellung befindlicher erster Rückenlehne 21 verläuft die Bügelachse 86 annähernd senkrecht zu der Vertikalrichtung z und geneigt, aber nicht senkrecht zu der Fahrtrichtung x. Bei in Nichtgebrauchsstellung befindlicher erster Rückenlehne 21 verläuft die Bügelachse 86 annähernd senkrecht zu der Fahrtrichtung x und geneigt, aber nicht senkrecht zu der Vertikalrichtung z.

Die Längsachsen 93, 94 der Achsbolzen 91, 92 verlaufen parallel zueinander und parallel zu den Mittelachsen der Befestigungselemente 81, 82. Bei mit dem Verriegelungsbügel 8 verriegelter Verriegelungsvorrichtung 9 verläuft die Bügelachse 86 parallel zu den Längsachsen 93, 94 der Achsbolzen 91, 92 und parallel zu den Mittelachsen der Befestigungselemente 81, 82.

Bei in annähernd aufrechter Gebrauchsstellung befindlicher zweiter Rückenlehne 22 schließen die Längsachsen 93, 94 der Achsbolzen 91, 92 mit der Querrichtung y einen Neigungswinkel W von vorliegend etwa 10° ein. Der Neigungswinkel W kann auch andere Werte annehmen und liegt vorzugsweise in einem Bereich zwischen 5° und 15°.

Bei in annähernd aufrechter Gebrauchsstellung befindlicher erster Rückenlehne 21 schließt die Bügelachse 86 des Verriegelungsbereichs 85 des Verriegelungsbügels 8 mit der Querrichtung y einen Neigungswinkel W von vorliegend etwa 10° ein. Der Neigungswinkel W kann auch andere Werte annehmen und liegt vorzugsweise in einem Bereich zwischen 5° und 15°.

Durch die gewählte Anordnung ist der Überstand der Verriegelungsvorrichtung 9 über die Struktur der Rückenlehne in Querrichtung y verkleinert. Insbesondere ragen abstehenden Köpfe der Achsbolzen 91, 92 weniger weit in Querrichtung y auf die erste Rückenlehne 21 zu als bei einer aus dem Stand der Technik bekannten Anordnung, bei welcher die Achsbolzen einer Verriegelungsvorrichtung in Querrichtung verlaufen.

### Bezugszeichenliste

- 5: Beschlag
- 7: Drehlager
- 8: Verriegelungsbügel
- 9: Verriegelungsvorrichtung
- 11: erster Sitzplatz
- 12: zweiter Sitzplatz
- 14: Sitzsegment
- 21: erste Rückenlehne
- 22: zweite Rückenlehne
- 24: erstes Sitzteil
- 31: erstes Lehnenblech
- 32: zweites Lehnenblech
- 41: rechter Längsholm
- 43: linker Längsholm
- 46: oberer Querholm
- 48: unterer Querholm
- 61: erste Kopfstützenaufnahme
- 62: zweite Kopfstützenaufnahme
- 64: Top-Tether-Bügel
- 71: Seitenholm
- 81: erstes Befestigungselement
- 82: zweites Befestigungselement
- 85: Verriegelungsbereich
- 86: Bügelachse
- 91: erster Achsbolzen
- 92: zweiter Achsbolzen
- 93: erste Längsachse
- 94: zweite Längsachse
- 95: Drehfalle
- A: Schwenkachse
- W: Neigungswinkel
- x: Längsrichtung
- y: Querrichtung
- z: Vertikalrichtung

## Patentansprüche

1. Fahrzeugsitz (1) mit einem Sitzsegment (14), welches einen ersten Sitzplatz (11) mit einer um eine in Querrichtung (y) verlaufenden Schwenkachse (A) schwenkbaren ersten Rückenlehne (21) und einen zweiten Sitzplatz (12) mit einer um die Schwenkachse (A) schwenkbaren zweiten Rückenlehne (22) umfasst, wobei an der zweiten Rückenlehne (22) eine Verriegelungsvorrichtung (9) angeordnet ist, welche mit einem an der ersten Rückenlehne (21) vorgesehenen Verriegelungsbügel (8) zusammenwirkt,
**dadurch gekennzeichnet,**
**dass** die Verriegelungsvorrichtung (9) mindestens einen Achsbolzen (92) umfasst, dessen Längsachse (94) geneigt zu der Querrichtung (y), d.h., bei in annähernd aufrechter Gebrauchsstellung befindlicher zweiter Rückenlehne (22) annähernd senkrecht zu der Vertikalrichtung (z) und geneigt, aber nicht senkrecht zu der Fahrtrichtung (x) und bei in Nichtgebrauchsstellung befindlicher zweiter Rückenlehne (22) annähernd senkrecht zu der Fahrtrichtung (x) und geneigt, aber nicht senkrecht zu der Vertikalrichtung (z) verläuft.

2. Fahrzeugsitz (1) nach Anspruch 1, **dadurch gekennzeichnet, dass** die Längsachse (94) mit der Querrichtung (y) einen Neigungswinkel (W) von 5° bis 15° einschließt.

3. Fahrzeugsitz (1) nach Anspruch 2, **dadurch gekennzeichnet, dass** die Längsachse (94) mit der Querrichtung (y) einen Neigungswinkel (W) von 10° einschließt.

4. Fahrzeugsitz (1) nach einem der vorstehenden Ansprüche, **dadurch gekennzeichnet, dass** die Verriegelungsvorrichtung (9) eine Drehfalle (95) umfasst, welche um den Achsbolzen (92) schwenkbar gelagert ist.

5. Fahrzeugsitz (1) nach Anspruch 4, **dadurch gekennzeichnet, dass** der Verriegelungsbügel (8) einen Verriegelungsbereich (85) umfasst, welchen die Drehfalle (95) bei mit dem Verriegelungsbügel (8) verriegelter Verriegelungsvorrichtung (9) umgreift.

6. Fahrzeugsitz (1) nach Anspruch 5, **dadurch gekennzeichnet, dass** der Verriegelungsbereich (85) annähernd geradlinig ausgebildet ist und sich entlang einer Bügelachse (86) erstreckt.

7. Fahrzeugsitz (1) nach Anspruch 6, **dadurch gekennzeichnet, dass** die Bügelachse (86) geneigt zu der Querrichtung (y), d.h., bei in annähernd aufrechter Gebrauchsstellung befindlicher erster Rückenlehne (21) annähernd senkrecht zu der Vertikalrichtung (z) und geneigt, aber nicht senkrecht zu der Fahrtrichtung (x) und bei in Nichtgebrauchsstellung befindlicher erster Rückenlehne (21) annähernd senkrecht zu der Fahrtrichtung (x) und geneigt, aber nicht senkrecht zu der Vertikalrichtung (z) verläuft.

8. Fahrzeugsitz (1) nach Anspruch 7, **dadurch gekennzeichnet, dass** die Bügelachse (86) mit der Querrichtung (y) einen Neigungswinkel (W) von 5° bis 15° einschließt.

9. Fahrzeugsitz (1) nach Anspruch 8, **dadurch gekennzeichnet, dass** die Bügelachse (86) mit der Querrichtung (y) einen Neigungswinkel (W) von 10° einschließt.

10. Fahrzeugsitz (1) nach einem der Ansprüche 6 bis 9, **dadurch gekennzeichnet, dass** die Bügelachse (86) bei mit dem Verriegelungsbügel (8) verriegelter Verriegelungsvorrichtung (9) parallel zu der Längsachse (94) des Achsbolzens (92) verläuft.

11. Fahrzeugsitz (1) nach einem der Ansprüche 4 bis 10, **dadurch gekennzeichnet, dass** die Verriegelungsvorrichtung (9) einen weiteren Achsbolzen (91) umfasst, um welchen ein Spannexzenter und/oder ein Fangexzenter, welcher zur Sicherung der Drehfalle bei verriegelter Verriegelungsvorrichtung (9) dient, schwenkbar gelagert ist.

12. Fahrzeugsitz (1) nach Anspruch 11, **dadurch gekennzeichnet, dass** der weitere Achsbolzen (91) eine weitere Längsachse (93) aufweist, welche parallel zu der Längsachse (94) des Achsbolzens (92) verläuft, um welchen die Drehfalle (95) schwenkbar gelagert ist.

## Claims

1. Vehicle seat (1) having a seat segment (14) which comprises a first seating space (11) having a first backrest (21) which can be pivoted about a pivot axis (A) which extends in the transverse direction (y) and a second seating space (12) having a second backrest (22) which can be pivoted about the pivot axis (A), wherein there is arranged on the second backrest (22) a locking device (9) which cooperates with a curved locking member (8) which is provided on the first backrest (21), **characterized in that** the locking device (9) comprises at least one axial pin (92) whose longitudinal axis (94) extends in an inclined manner relative to the transverse direction (y), that is to say when the second backrest (22) is in a substantially upright position for use, substantially perpendicularly to the vertical direction (z) and in an inclined manner, but not perpendicularly to the travel direction (x), and when the second backrest (22) is in the non-use position, substantially perpendicularly to the travel direction (x) and in an inclined manner, but not perpendicularly to the vertical direction (z).

2. Vehicle seat (1) according to Claim 1, **characterized in that** the longitudinal axis (94) defines with the transverse direction (y) an inclination angle (W) of from 5° to 15°.

3. Vehicle seat (1) according to Claim 2, **characterized in that** the longitudinal axis (94) defines with the transverse direction (y) an inclination angle (W) of 10°.

4. Vehicle seat (1) according to one of the preceding claims, **characterized in that** the locking device (9) comprises a rotary latch (95) which is pivotably supported about the axial pin (92).

5. Vehicle seat (1) according to Claim 4, **characterized in that** the curved locking member (8) comprises a locking region (85) around which the rotary latch (95) engages when the locking device (9) is locked to the curved locking member (8).

6. Vehicle seat (1) according to Claim 5, **characterized in that** the locking region (85) is constructed in a substantially linear manner and extends along a curved member axis (86).

7. Vehicle seat (1) according to Claim 6, **characterized in that** the curved member axis (86) extends in an inclined manner relative to the transverse direction (y), that is to say when the first backrest (21) is in a substantially upright position for use, substantially perpendicularly to the vertical direction (z) and in an inclined manner, but not perpendicularly to the travel direction (x), and when the first backrest (21) is in the non-use position, substantially perpendicularly to the travel direction (x) an in an inclined manner, but not perpendicularly to the vertical direction (z).

8. Vehicle seat (1) according to Claim 7, **characterized in that** the curved member axis (86) defines with the transverse direction (y) an inclination angle (W) of from 5° to 15°.

9. Vehicle seat (1) according to Claim 8, **characterized in that** the curved member axis (86) defines with the transverse direction (y) an inclination angle (W) of 10°.

10. Vehicle seat (1) according to one of Claims 6 to 9, **characterized in that**, when the locking device (9) is locked to the curved locking member (8), the curved member axis (86) extends parallel with the longitudinal axis (94) of the axial pin (92).

11. Vehicle seat (1) according to one of Claims 4 to 10, **characterized in that** the locking device (9) comprises an additional axial pin (91) about which a clamping cam and/or a catch cam which serves to secure the rotary latch when the locking device (9) is locked is pivotably supported.

12. Vehicle seat (1) according to Claim 11, **characterized in that** the additional axial pin (91) has another longitudinal axis (93) which extends parallel with the longitudinal axis (94) of the axial pin (92), about which the rotary latch (95) is pivotably supported.

## Revendications

1. Siège de véhicule (1) comprenant un segment de siège (14) qui comprend un premier emplacement de siège (11) avec un premier dossier (21) pouvant pivoter autour d'un axe de pivotement (A) s'étendant dans la direction transversale (y) et un deuxième emplacement de siège (12) avec un deuxième dossier (22) pouvant pivoter autour de l'axe de pivotement (A), un dispositif de verrouillage (9) étant disposé au niveau du deuxième dossier (22), lequel coopère avec un étrier de verrouillage (8) prévu au niveau du premier dossier (21),
**caractérisé en ce que**
le dispositif de verrouillage (9) comprend au moins un boulon pivot (92) dont l'axe longitudinal (94) s'étend de manière inclinée par rapport à la direction transversale (y), c'est-à-dire, lorsque le deuxième dossier (22) se trouve approximativement dans une position d'utilisation verticale, approximativement perpendiculairement à la direction verticale (z) et de manière inclinée, mais pas perpendiculairement à la direction de conduite (x), et lorsque le deuxième dossier (22) se trouve dans la position de non-utilisation, approximativement perpendiculairement à la direction de conduite (x) et de manière inclinée, mais pas perpendiculairement à la direction verticale (z).

2. Siège de véhicule (1) selon la revendication 1, **caractérisé en ce que** l'axe longitudinal (94) forme avec la direction transversale (y) un angle d'inclinaison (W) de 5° à 15°.

3. Siège de véhicule (1) selon la revendication 2, **caractérisé en ce que** l'axe longitudinal (94) forme avec la direction transversale (y) un angle d'inclinaison (W) de 10°.

4. Siège de véhicule (1) selon l'une quelconque des revendications précédentes, **caractérisé en ce que** le dispositif de verrouillage (9) comprend un pêne (95) qui est supporté de manière pivotante autour du boulon pivot (92).

5. Siège de véhicule (1) selon la revendication 4, **caractérisé en ce que** l'étrier de verrouillage (8) comprend une région de verrouillage (85) autour de laquelle s'engage le pêne (95) lorsque le dispositif de verrouillage (9) est verrouillé avec l'étrier de verrouillage (8).

6. Siège de véhicule (1) selon la revendication 5, **caractérisé en ce que** la région de verrouillage (85) est réalisée approximativement sous forme rectiligne et s'étend le long d'un axe d'étrier (86).

7. Siège de véhicule (1) selon la revendication 6, **caractérisé en ce que** l'axe d'étrier (86) s'étend de manière inclinée par rapport à la direction transversale (y), c'est-à-dire, lorsque le premier dossier (21) se trouve approximativement dans une position d'utilisation verticale, approximativement perpendiculairement à la direction verticale (z) et de manière inclinée, mais pas perpendiculairement à la direction de conduite (x), et lorsque le premier dossier (21) se trouve dans la position de non-utilisation, approximativement perpendiculairement à la direction de conduite (x) et de manière inclinée, mais pas perpendiculairement à la direction verticale (z).

8. Siège de véhicule (1) selon la revendication 7,
**caractérisé en ce que**
l'axe d'étrier (86) forme avec la direction transversale (y) un angle d'inclinaison (W) de 5° à 15°.

9. Siège de véhicule (1) selon la revendication 8, **caractérisé en ce que** l'axe d'étrier (86) forme avec la direction transversale (y) un angle d'inclinaison (W) de 10°.

10. Siège de véhicule (1) selon l'une quelconque des revendications 6 à 9, **caractérisé en ce que** l'axe d'étrier (86), lorsque le dispositif de verrouillage (9) est verrouillé avec l'étrier de verrouillage (8), s'étend parallèlement à l'axe longitudinal (94) du boulon pivot (92).

11. Siège de véhicule (1) selon l'une quelconque des revendications 4 à 10, **caractérisé en ce que** le dispositif de verrouillage (9) comprend un boulon pivot supplémentaire (91), autour duquel est supporté de manière pivotante un excentrique de serrage et/ou un excentrique de capture qui sert à fixer le pêne lorsque le dispositif de verrouillage (9) est verrouillé.

12. Siège de véhicule (1) selon la revendication 11, **caractérisé en ce que** le boulon pivot supplémentaire (91) présente un axe longitudinal supplémentaire (93) qui s'étend parallèlement à l'axe longitudinal (94) du boulon pivot (92) autour duquel le pêne (95) est supporté de manière pivotante.
